# EUROPEAN PATENT APPLICATION

(11) **EP 3 605 802 A1**
(43) Date of publication of application: **05.02.2020**
(21) Application number: 18858616.8
(22) Date of filing: 31.05.2018
(51) Int. Cl.: H02K 5/10, B64D 27/24, H02K 5/20, H02K 9/26

(54) **ALL-WEATHER MOTOR**

(30) Priority: 20.09.2017 JP 2017180162
(71) Applicant: Shinano Kenshi Kabushiki Kaisha, Nagano 386-0498 (JP)
(72) Inventor: HANAOKA Yasuo, Ueda-shi Nagano 386-0498 (JP)
(74) Representative: Mewburn Ellis LLP
(86) International application number: PCT/JP2018/020968
(87) International publication number: WO 2019/058647

(57) **Abstract**

To provide a highly durable all-weather motor capable of preventing deterioration of motor performance by enhancing heat dissipation properties and capable of maintaining motor performance by enhancing dust-proof and drip-proof performance and preventing invasion of foreign matter. As a solution means, a rotor (14) includes a rotating case body (4) covering an outer peripheral side of a stator core (12) and both end sides in an axial direction of a bearing housing (11), having intake openings (4e) from which air is taking in on one end side in the axial direction and having discharge openings (4f) from which air is discharged in a radial direction on the other end side in the axial direction, and a fin (17) provided on an inner surface of the other end in the axial direction of the rotating case body (4), and the intake openings (4e) and the discharge openings (4f) are respectively covered with a water-repellent filter material (18) with a prescribed opening diameter.

## Description

### Technical Field

The present invention relates to an all-weather motor used in an exposed state in the outdoor as a driving source for, for example, an unmanned aerial vehicle (commonly-called a drone) or the like that is remotely controlled.

### Background Art

In general, a motor tends to be filled with heat inside a housing due to heat generation of coils when starting operation. As motor performance is deteriorated when the heat generation of the motor is increased, it is necessary to cool the inside of the motor. Accordingly, an open-type motor is proposed, in which a heat dissipation fan is provided on one end side of the motor housing so that an air flow is taken in from an air intake port provided on one end side into an internal space and hot air inside the motor is discharged from an air discharge port on the other end side of the motor housing to thereby improve heat dissipation properties (refer to PTL 1: JP-A-2017-17983).

In contrast to the above, in a case where a motor unit is assembled to a pump unit, a totally-enclosed motor is also proposed, in which the motor is housed in a motor cover and the motor cover is joined to a motor base to seal the motor (refer to PTL 2: JP-A-2009-290981).

### Citation List

### Patent Literature

PTL 1: JP-A-2017-17983
PTL 2: JP-A-2009-290981

### Summary of Invention

### Technical Problem

For example, a motor used as a driving source for an unmanned aerial vehicle (commonly-called a drone) that is remotely controlled is used with a high output mainly in the outdoor in many cases. In a case where the motor is continuously used with the high output, heat generation inside the motor is high, and it is necessary to widely secure an opening of a motor case for enhancing heat dissipation properties. However, there is a danger of causing a motor lock in this structure as it is difficult to prevent invasion of foreign matter such as dust or sand and invasion of water from the outside.

When the totally-enclosed motor not having the opening in the motor case is adopted in response to the above, the invasion of foreign matter or water into the motor can be prevented, but it is difficult to obtain the high output because heat generation of the motor is not dissipated; therefore, there is a danger of deterioration in flying performance.

In view of the above, an all-weather motor capable of preventing deterioration of motor performance due to heat generation of the motor and having dust-proof and drip-proof functions preventing invasion of foreign matter and water into the motor is required.

### Solution to Problem

A disclosure applied to some embodiments described below has been made for solving the above problems, and an object thereof is to provide a highly durable all-weather motor capable of preventing deterioration of motor performance by enhancing heat dissipation properties and capable of maintaining motor performance by enhancing dust-proof and drip-proof performance.

The disclosure applied to some embodiments described below includes at least following structures.

An all-weather motor includes an attachment base, a bearing housing integrally assembled to the attachment base, a stator having a stator core integrally assembled to the bearing housing and a rotor having a rotor magnet supported to face the stator core and supported by the bearing housing so as to rotate through bearings, in which the rotor includes a rotating case body covering an outer peripheral side of the stator and both end sides in an axial direction of the bearing housing, having intake openings on one end side in the axial direction and having discharge openings on the other end side in the axial direction, and a fin provided on the other end side in the axial direction inside the rotating case body, and the intake openings and the discharge openings are respectively covered with a filter material with a prescribed opening diameter.

According to the above structure, both ends in the axial direction and outer peripheral surfaces of the stator and rotor forming the motor are covered by the rotating case body; therefore, foreign matter and water do not enter the inside of the motor easily. Moreover, the intake openings and the discharge openings are covered with the filter material; therefore, dust-proof and drip-proof effects are high.

The rotating case body integrated with the rotor rotates when the motor is activated, and the fin provided inside the rotating case body rotates, thereby taking in air from the intake openings on one end side in the axial direction of the rotating case body, and sending hot air generated inside the motor to an outer side in a radial direction by the fin on the other end side in the axial direction to be discharged from the discharge openings.

According to the above, it is possible to provide the all-weather motor capable of preventing deterioration of motor performance by enhancing heat dissipation properties of the motor and capable of maintaining motor performance by enhancing dust-proof and drip-proof performance.

It is preferable that air is taken in through the filter material in the axial direction from the intake openings provided on one end side in the axial direction of the rotating case body and is sent toward the outer side in the radial direction by the fin provided on an inner surface of the other end in the axial direction of the rotating case body to be discharged from the discharge openings through the filter material.

According to the above, when the motor is started, air is taken in from the intake openings of the rotating case body through the filter material to cool the stator core and the coil, and hot air is sent toward the outer side in the radial direction by rotation of the fin to be discharged from the discharge openings through the filter material; therefore, invasion of foreign matter and water can be prevented by the filter material while maintaining motor performance by enhancing heat dissipation properties. In particular, drip-proof performance can be enhanced due to existence of the filter material and discharge from the discharge openings.

It is preferable to use an opening diameter smaller than a clearance dimension between stator pole teeth and the rotor magnet as the opening diameter of the filter material.

According to the above, it is possible to prevent occurrence of the motor lock due to foreign matter such as dust being caught in the clearance between the stator pole teeth and the rotor magnet.

It is preferable that the filter material covering the intake openings is provided so as to be replaceable.

According to the above, maintenance work becomes easy as the filter material covering the intake openings easily gets dirty for removing dust or foreign matter at the time of taking in outdoor air and a filter function tends to be reduced.

It is preferable that air is taken in from the intake openings provided at a lower part in the axial direction of the rotating case body and is discharged from the discharge openings provided on the outer side in the radial direction at an upper part thereof in the axial direction.

According to the above, air is taken in from the intake openings provided at the lower part in the axial direction and is discharged from the discharge openings provided on the outer side in the radial direction at the upper part thereof in the axial direction; therefore, water does not enter any of openings easily and drip-proof performance can be enhanced.

A position where the intake openings are provided is preferably a lower end surface in the axial direction in consideration of drip-proof properties when the rotating case body is, for example, a bottomed cylindrical body. The intake openings are preferably provided on a lower surface in the axial direction when the rotating case body has curved surfaces not having an end surface.

### Advantageous Effects of Invention

According to the above structures, it is possible to provide the highly durable all-weather motor capable of preventing deterioration of motor performance by enhancing heat dissipation properties and capable of maintaining motor performance by enhancing dust-proof and drip-proof performance.

### Brief Description of Drawings

Fig. 1 is a perspective exterior view of an all-weather motor used as a driving source for a flying object.
Fig. 2 is a vertical sectional view in an axial direction of the all-weather motor.
Fig. 3 is a perspective explanatory view of the vertical cross-sectional view in the axial direction of Fig. 2 seen from intake opening side.
Fig. 4 is an exploded perspective view of the motor of Fig. 1.
Fig. 5 is a vertical cross-sectional view in the axial direction of an all-weather motor according to another example.
Fig. 6 is a perspective explanatory view of the vertical cross-sectional view in the axial direction of Fig. 5 seen from intake opening side.

### Description of Embodiments

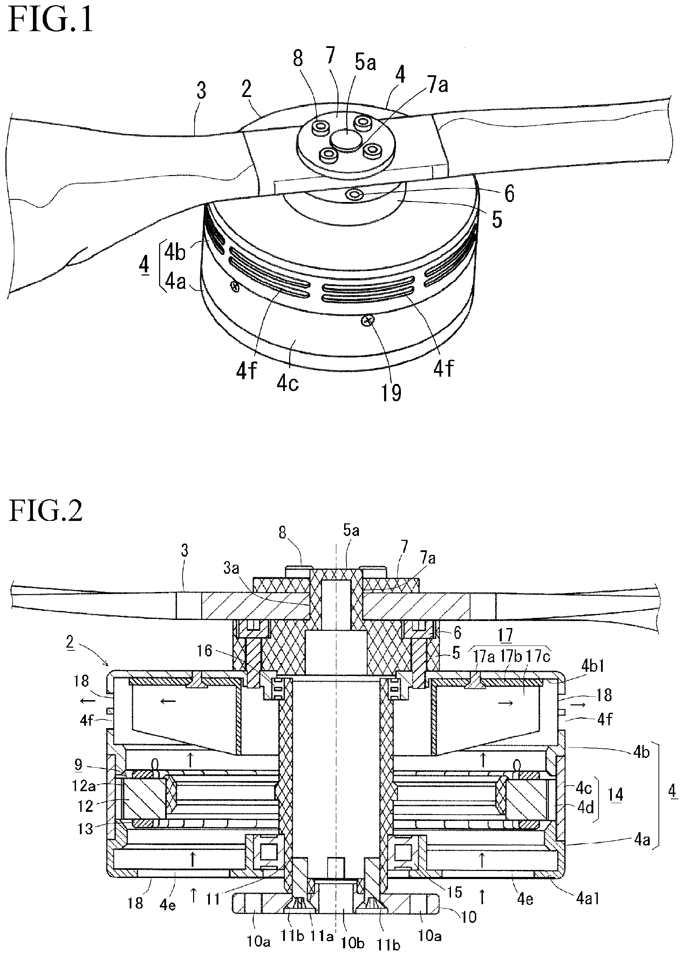

Hereinafter, an all-weather motor according to an embodiment will be explained with reference to the attached drawings of Fig. 1 to Fig. 6. The embodiment will be explained by citing an all-weather motor 2 used as a driving source for an unmanned aerial vehicle (commonly-called a drone) as an example. The unmanned aerial vehicle (not shown) flies by transmitting an operation signal by a transmitter by remote control to rotate a propeller at high speed, which is rotated by driving of a plurality of motors supported in a vehicle body frame. A flight controller is provided in the vehicle body frame, which controls the motor driving by a transmission signal received through a receiver.

As shown in Fig. 1, a DC brushless motor is used for the all-weather motor 2. As the DC brushless motor, an outer rotor motor in which the high output is expected is suitably used. A propeller 3 is integrally assembled to a rotor of the all-weather motor 2 as described later. Specifically, a pedestal plate 5 is fixed by plural screws 6 at a central part on an upper end surface of a rotating case body 4 forming the rotor. Tip end parts of the screws 6 are integrally assembled to the rotating case body 4 by screw fitting (see Fig. 2). A shaft part 5a is provided to protrude on an upper surface of the pedestal plate 5. The shaft part 5a is inserted into a shaft hole 3a (see Fig. 2) of the propeller 3 to thereby assemble the propeller 3 onto the pedestal plate 5. A stopper plate 7 is fixed so as to overlap with the propeller 3. The stopper plate 7 overlaps with the propeller 3 while the shaft part 5a is inserted into a shaft hole 7a (see Fig. 2) and is integrally fixed by screws 8.

Next, a structure of the all-weather motor 2 will be explained with reference to Fig. 2.

A structure of a stator 9 will be explained. An attachment base 10 is used when, for example, the DC blushless motor is fixed to the vehicle body frame (not shown) of the unmanned aerial vehicle. Screw holes 10a for fixing the motor onto an attachment surface of, for example, the vehicle body frame or the like by screws are drilled on the attachment base 10. The attachment base 10 is provided with a through hole 10b at a central part for reducing the weight. One end part 11a of a cylindrical bearing housing 11 is integrally fixed by screws 11b in a state of overlapping with the attachment base 10 so as to stand.

A stator core 12 is integrally assembled to the bearing housing 11 by press-fitting, welding, screw-fitting or combinations thereof. As the stator core 12, a lamination core formed by laminating and pressing electromagnetic steel sheets, an integral core formed by electrical discharge machining or laser-cutting of a metal plate, a core made of a sintered metal formed by firing metal powder and other types of cores may be adopted.

In the stator core 12, a plurality of pole teeth 12a are provided to protrude radially from an annular core back part. Coils 13 are wound on respective pole teeth 12a with insulation coating or through insulators.

Next, a structure of a rotor 14 will be explained.

The rotating case body 4 forming the rotor 14 is supported by both-end outer peripheral parts in a longitudinal direction of the bearing housing 11 through a first bearing 15 and a second bearing 16 so as to rotate. The first bearing 15 and the second bearing 16 are fixed to the outer periphery of the bearing housing 11 by, for example, press-fitting, welding, clearance-fitting and the like.

The rotating case body 4 is integrally assembled so that a first case body 4a covering an outer peripheral side and one end part in an axial direction of the bearing housing 11 and a second case body 4b covering the outer peripheral side and the other end part in the axial direction of the bearing housing 11 sandwich an annular back yoke 4c covering an outer peripheral side of the stator core 12. The first case body 4a and the back yoke 4c are fixed by adhesion, and the second case body 4b and the back yoke 4c are screw-fixed by fixing screws 19 (see Fig. 1).

An aluminum material and so on are used for the first case body 4a and the second case body 4b for reducing weight. Magnetic materials (magnetic materials such as iron and SUS) are used for the back yoke 4c for forming a magnetic path. On an inner peripheral surface of the annular back yoke 4c, an annular rotor magnet 4d magnetized into N-poles and S-poles alternately in a circumferential direction is supported. The rotor magnet 4d is arranged to face teeth tips of the pole teeth 12a of the stator core 12.

Intake openings 4e are provided at plural places on an end surface 4a1 in the axial direction of the first case body 4a. Air is taken in from the intake openings 4e in the axial direction to thereby cool the stator core 12 and the coils 13 (stator 9). A fin 17 is integrally assembled to an inner end surface 4b1 in the axial direction of the second case body 4b by screws 17a. The fin 17 is assembled so that a base plate 17b overlaps with the inner end surface 4b1 in the axial direction by screw-fitting. A plurality of slats 17c extended in a radial direction are formed to stand in the circumferential direction on the base plate 17b. On a side surface part of the second case body 4b facing tip end parts on an outer peripheral side of the slats 17c, discharge openings 4f are provided. When the fin 17 rotates, air taken in from the intake openings 4e in the axial direction is sent toward an outer side in the radial direction and discharged from the discharge openings 4f.

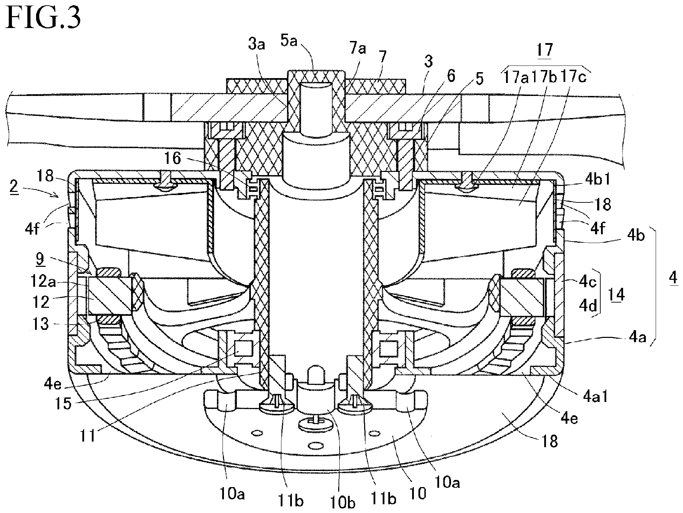

The above-described intake openings 4e and the discharge openings 4f are respectively covered with a filter material 18 (for example, mesh sheets made of nylon 66) having breathability and water repellency with a prescribed opening diameter (see Fig. 3). The filter material 18 is fixed to inner peripheral surfaces of the first case body 4a and the second case body 4b by adhesion and the like. As the opening diameter (for example, a square hole with 77µm in one side) of the filter material 18, a diameter smaller than a clearance (for example, 160µm) between the stator pole teeth 12a and the rotor magnet 4d is suitably used. According to the above, it is possible to prevent occurrence of the motor lock due to foreign matter such as dust being caught in the clearance between the stator pole teeth 12a and the rotor magnet 4d, and moreover, waterproof and drip-proof functions of the intake openings 4e and the discharge openings 4f can be also secured.

Though the filter material 18 covering the intake openings 4e may be fixed by adhesion and the like, it is desirable to be provided so as to be replaceable, for example, through a not-shown attachment. This facilitates maintenance work as the filter material 18 covering the intake openings 4e easily gets dirty for removing dust or foreign matter at the time of taking in outdoor air and a filter function tends to be reduced. The filter material 18 is not limited to the mesh sheet material but may be a porous sheet material such as sponge. Both a resin material and a metal material may be used as materials.

When the rotation case body 4 rotates together with the rotor 14, air is taken in from the intake openings 4e in the axial direction through the water-repellent filter material 18 and sent toward the outer side in the radial direction by the fin 17 via the stator core 12 to be discharged through the discharge openings 4f.

When the all-weather motor 2 is started, air taken in from the intake openings 4e of the rotation case body 4 through the filter material 18 cools the coils 13 of the stator core 12, and then hot air is sent toward the outer side in the radial direction by the rotation of the fin 17 and is discharged from the discharge openings 4f through the filter material 18 as shown by arrows in Fig. 2. Accordingly, it is possible to prevent invasion of foreign mater and water by the filter material 18 while maintaining motor performance by enhancing heat dissipation properties. In particular, air is taken in from the intake openings 4e provided at a lower part in the axial direction and is discharged from the discharge openings 4f provided on the outer side in the radial direction at an upper part thereof in the axial direction in addition to the existence of the filter material 18; therefore, water does not enter any of the openings easily and the drip-proof properties can be enhanced.

As the stator 9 and the rotor 14 forming the all-weather motor 2 are covered with the rotating case body 4 at both ends in the axial direction and the outer peripheral surface according to the above structure, foreign matter does not enter the inside of the motor 2 easily. Furthermore, the intake opening 4e and the discharge openings 4f are covered with the filter material 18 and therefore dust-proof and drip-proof effects are high.

Moreover, when the all-weather motor 2 is activated, the rotating case body 4 integrated with the rotor 14 rotates and the fin 17 provided inside the rotation case body 4 rotates, thereby taking in air from the intake openings 4e on one end side in the axial direction of the rotating case body 4, and sending hot air generated inside the motor to the outer side in the radial direction by the fin 17 on the other end side in the axial direction to be discharged from the discharge openings 4f.

Accordingly, it is possible to provide the all-weather motor 2 capable of preventing deterioration of motor performance by enhancing heat dissipation properties of the motor and capable of maintaining motor performance by enhancing dust-proof and drip-proof performance.

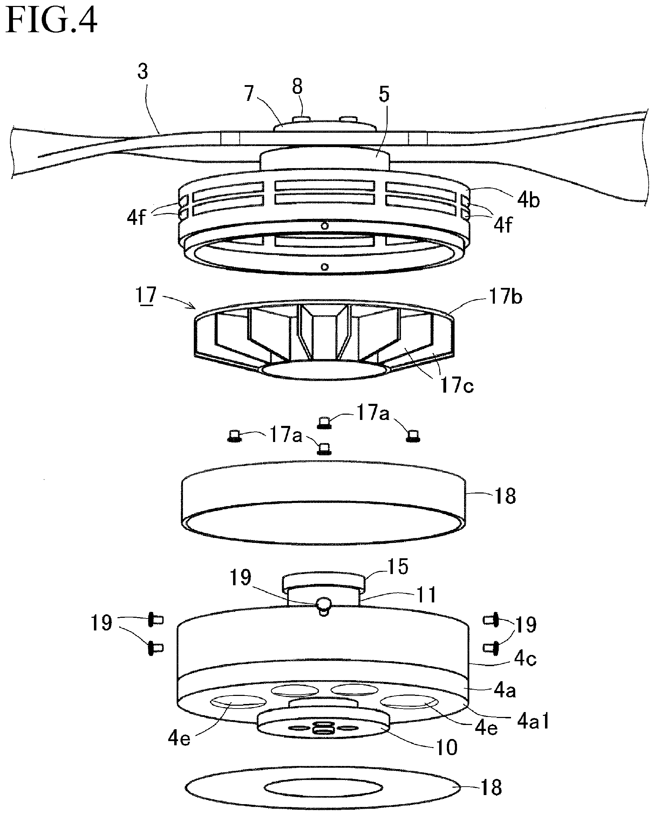

An example of an assembly structure of the unmanned aerial vehicle including the above all-weather motor 2 will be explained with reference to Fig. 3 and Fig. 4. The pedestal plate 5 is fixed to the second case body 4b of the rotating case body 4 by plural screws 6 (see Fig. 3) in advance. The shaft part 5a provided in the pedestal plate 5 to protrude is inserted into the shaft hole 3a of the propeller 3 to thereby assemble the propeller 3 onto the pedestal plate 5, and inserted into the shaft hole 7a so that the stopper plate 7 overlaps with the propeller 3 from above and integrally fixed by the screws 8. The filter material 18 is adhered so as to cover the outer surface side of the intake openings 4e of the first case body 4a and the inner surface side of the discharge openings 4f of the second case body 4b, respectively (see Fig. 4).

The stator 9 is integrally assembled to the bearing housing 11 screwed to the attachment base 10. The first bearing 15 and the second bearing 16 are respectively assembled to both end parts in a longitudinal direction of the bearing housing 11. The first case body 4a is supported so as to rotate with respect to the bearing housing 11 through the first bearing 15, and the second case body 4b is supported so as to rotate with respect to the bearing housing 11 through the second bearing 16 (see Fig. 3).

As shown in Fig. 4, the fin 17 is integrally assembled to the inner end surface 4b1 in the axial direction of the second case body 4b by screw-fitting using the screws 17a. The back yoke 4c supporting the rotor magnet 4d is assembled so as to be fitted to opening ends of the first case body 4a and the second case body 4b, respectively. Then, the first case body 4a and the back yoke 4c are fixed by adhesion, and the first case body 4a and the second case body 4b are integrally assembled through the back yoke 4c by screw-fitting the fixing screws 19 to an overlapped portion between the second case body 4b and the back yoke 4c.

When the all-weather motor 2 is activated as shown in Fig. 2, the rotating case body 4 integrated with the rotor 14 rotates. At this time, the fin 17 inside the rotating case body 4 rotates, thereby taking in air in the axial direction from the intake openings 4e on one end side in the axial direction of the rotating case body 4, and sending hot air generated inside the motor to the outer side in the radial direction by the fin 17 on the other end side in the axial direction to be discharged from the discharge opening 4f.

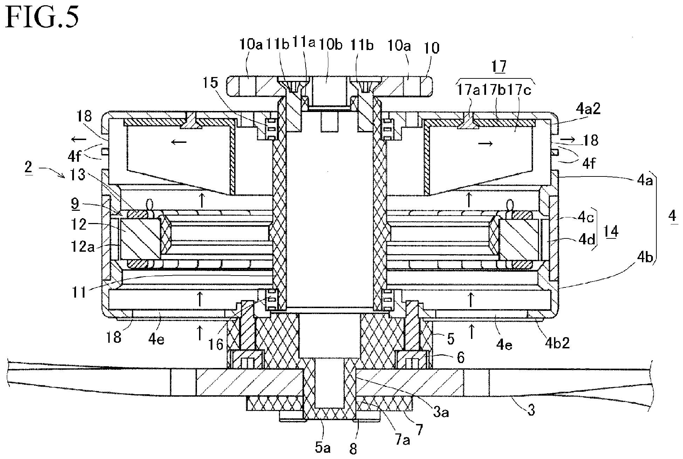

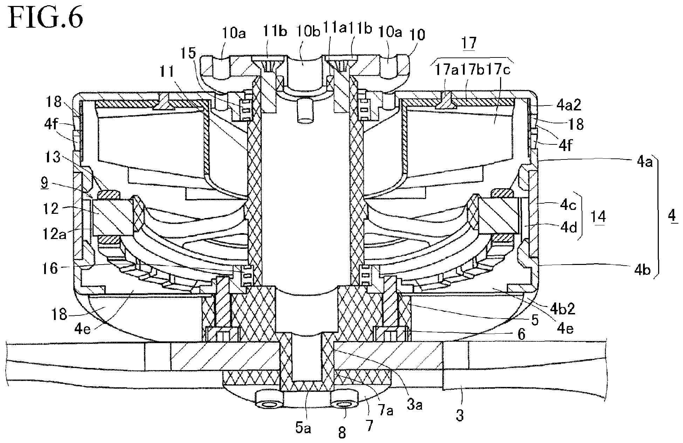

Next, modification examples of the all-weather motor 2 are shown in Fig. 5 and Fig. 6. The same numerals are given to the same members as those shown in Fig. 1 to Fig. 4 and explanation is invoked, and different structures will be mainly explained. The above-described all-weather motor 2 is used as the driving source for the unmanned aerial vehicle, which also can be used by arranging the first case body 4a and the second case body 4b of the rotating case body 4 upside down and, more specifically, by arranging the attachment base 10 and the propeller 3 upside down.

In Fig. 5, the intake openings 4e are provided at plural places on an end surface 4b2 in the axial direction of the second case body 4b. Air is taken in from the intake openings 4e in the axial direction to thereby cool the stator core 12 and the coils 13 (stator 9). The fin 17 is integrally assembled to an inner end surface 4a2 in the axial direction of the first case body 4a by the screws 17a. The fin 17 is assembled so that the base plate 17b overlaps with the inner end surface 4a2 in the axial direction by screw-fitting. A plurality of slats 17c extended in the radial direction are formed to stand in the circumferential direction on the base plate 17b.

On a side surface part of the first case body 4a facing tip end parts on the outer peripheral side of the slats 17c, the discharge openings 4f are provided. When the fin 17 rotates, air taken in from the intake openings 4e in the axial direction is sent toward the circumferential direction and discharged from the discharge openings 4f.

According to the above, it is possible to prevent occurrence of the motor lock due to foreign matter such as dust being caught in the clearance between the stator pole teeth 12a and the rotor magnet 4d, and moreover, waterproof and drip-proof functions of the intake openings 4e and the discharge openings 4f can be also secured.

An example of an assembly structure of the unmanned aerial vehicle including the above all-weather motor 2 will be explained with reference to Fig. 6. The pedestal plate 5 is fixed to the second case body 4b forming the rotating case body 4 by plural screws 6 in advance. The shaft part 5a provided in the pedestal plate 5 to protrude is inserted into the shaft hole 3a of the propeller 3 to thereby assemble the propeller 3 onto the pedestal plate 5, and inserted into the shaft hole 7a so that the stopper plate 7 overlaps with the propeller 3 and integrally fixed by the screws 8. The filter material 18 is adhered so as to cover the outer surface side of the intake openings 4e of the second case body 4b and the inner surface side of the discharge openings 4f of the first case body 4a, respectively.

The stator 9 is integrally assembled to the bearing housing 11 screwed to the attachment base 10. The first bearing 15 and the second bearing 16 are respectively assembled to both end parts in the longitudinal direction of the bearing housing 11. The first case body 4a is supported so as to rotate with respect to the bearing housing 11 through the first bearing 15, and the second case body 4b is supported so as to rotate with respect to the bearing housing 11 through the second bearing 16. In this case, it is preferable to use a sealed bearing as the first bearing 15, whereby invasion of water is prevented.

The fin 17 is integrally assembled to the inner end surface 4a2 of the first case body 4a by screw-fitting using the screws 17a. The back yoke 4c supporting the rotor magnet 4d is assembled so as to be fitted to opening ends of the first case body 4a and the second case body 4b, respectively. Then, the first case body 4a and the back yoke 4c are fixed by adhesion, and the first case body 4a and the second case body 4b are integrally assembled through the back yoke 4c by screw-fitting the fixing screws 19 (see Fig. 1) to an overlapped portion between the second case body 4b and the back yoke 4c.

When the all-weather motor 2 is activated as shown in Fig. 5, the rotating case body 4 integrated with the rotor 14 rotates. At this time, the fin 17 inside the rotating case body 4 rotates, thereby taking in air in the axial direction from the intake openings 4e on one end side in the axial direction of the rotating case body 4, and sending hot air generated inside the motor 2 to the outer side in the radial direction by the fin 17 on the other end side in the axial direction to be discharged from the discharge opening 4f.

Accordingly, it is possible to provide the all-weather motor 2 capable of preventing deterioration of motor performance by enhancing heat dissipation properties of the motor and capable of maintaining motor performance by enhancing dust-proof and drip-proof performance and preventing invasion of foreign matter.

The all-weather motor 2 shown in Fig. 2 and the all-weather motor 2 shown in Fig. 5 can be assembled to upper and lower parts of the vehicle body frame of the unmanned aerial vehicle so that the attachment bases 10 face each other. As rotation directions of the propellers 3 (all-weather motors 2) are opposite to each other in this case, the motors are driven to be forwardly/reversely rotated, and motor vibrations acting on the vehicle body frame are opposite directions and cancel each other out; therefore, vibrations can be reduced even when the thrust is doubled. In the case where the all-weather motors 2 shown in Fig. 2 and Fig. 5 are attached to upper and lower parts through the vehicle body frame, air is taken in to respective rotation case bodies 4 from the intake openings 4e at the lower parts in the axial direction and is discharged from the discharge openings 4f at the upper side parts in the axial direction; therefore, the motor performance can be maintained by enhancing the dust-proof and drip-proof performance and preventing invasion of foreign matter and water.

Though the DC brushless motor is used for the above-described all-weather motor 2, other motors such as a DC brush motor may be used.

Moreover, the fin 17 fixed to the rotating case body 4 by screw-fitting may be integrally formed with the rotating case body 4 (the first case body 4a or the second case body 4b).

Moreover, the intake openings 4e are preferably provided on a lower end surface in the axial direction in consideration of drip-proof properties in the case where the rotating case body 4 has a bottomed cylindrical body as described above; however, it is desirable that the intake openings 4e are provided on a lower surface in the axial direction in a case where the rotating case body 4 has curved surfaces not having an end surface.

Moreover, as the filter material 18, various types of materials and forms such as a porous material made of resin and a metal mesh material as far as water repellency, breathability and dust-proof properties can be secured.

The case where the all-weather motor 2 is used as the driving source for the unmanned aerial vehicle has been explained in the above embodiments. However, applications are not limited to the above, and the all-weather motor 2 may be adopted as driving sources for other applications used outdoors.

## Claims

1. An all-weather motor comprising:
an attachment base;
a bearing housing integrally assembled to the attachment base;
a stator having a stator core integrally assembled to the bearing housing; and
a rotor having a rotor magnet supported to face the stator core and supported by the bearing housing so as to rotate through bearings,
wherein the rotor includes a rotating case body covering an outer peripheral side of the stator and both end sides in an axial direction of the bearing housing, having intake openings on one end side in the axial direction and having discharge openings on the other end side in the axial direction, and a fin provided on the other end side in the axial direction inside the rotating case body, and
the intake openings and the discharge openings are respectively covered with a filter material with a prescribed opening diameter.

2. The all-weather motor according to claim 1, wherein air is taken in through the filter material in the axial direction from the intake openings provided on one end side in the axial direction of the rotating case body and is sent toward an outer side in a radial direction by the fin provided on an inner surface of the other end in the axial direction of the rotating case body to be discharged from the discharge openings through the filter material.

3. The all-weather motor according to claim 1 or 2, wherein an opening diameter smaller than a clearance dimension between stator pole teeth and the rotor magnet is used as the opening diameter of the filter material.

4. The all-weather motor according to any one of claims 1 to 3, wherein the filter material covering the intake openings is provided so as to be replaceable.

5. The all-weather motor according to any one of claims 1 to 4, wherein air is taken in from the intake openings provided on a lower part in the axial direction of the rotating case body and is discharged from the discharge openings provided on the outer side in the radial direction at an upper part thereof in the axial direction.
